# EUROPÄISCHE PATENTSCHRIFT

(11) **EP 1 431 146 B1**
(45) Veröffentlichungstag und Bekanntmachung des Hinweises auf die Patenterteilung: **20.04.2011**
(21) Anmeldenummer: 03013671.7
(22) Anmeldetag: 17.06.2003
(51) Int. Cl.: B60S 1/08, C09J 5/00, C08J 5/12

(54) **Verfahren zum Befestigen eines Sensors auf einer Oberfläche und ein Sensor hierzu**
A method for attaching a sensor to the surface and the corresponding sensor
Procédé pour la fixation d'un capteur sur une surface et capteur correspondant

(30) Priorität: 20.12.2002 DE 10261245
(43) Veröffentlichungstag der Anmeldung: 23.06.2004
(73) Patentinhaber: ROBERT BOSCH GMBH, 70442 Stuttgart (DE)
(72) Erfinder: Buss, Heiko, 77815 Buehl Altschweier (DE); Stampfer, Stefan, 777815 Buehl (DE)

(56) Entgegenhaltungen:
- EP-A- 1 251 048
- WO-A-01/81774
- DE-A- 4 101 995
- DE-A- 10 211 444
- DE-A- 19 902 922
- DE-C- 4 307 479
- US-A1- 2001 039 990
- US-A1- 2002 079 121

## Beschreibung

Die Erfindung betrifft ein Verfahren zum Befestigen eines optischen Sensors auf einer Oberfläche, insbesondere zum Befestigen eines Regensensors auf einer Scheibenoberfläche. Die Erfindung betrifft weiterhin einen Sensor, der auf einer Oberfläche befestigt werden kann.

Regensensoren sind beispielsweise im Innenraum eines Kraftfahrzeugs an der Windschutzscheibe im Bereich des Wischfeldes der Scheibenwischer angebracht. Ein solcher optischer Sensor detektiert die Veränderung der Totalreflektion an der Außenfläche der Windschutzscheibe bei Kontamination, d. h. Benetzung mit Wasser im Bereich des Sensors, wobei abhängig von der Lichtreflektion ein elektronisches Signal generiert wird, welches die Wischgeschwindigkeit des Scheibenwischers steuert.

Die bekannten Regensensorsysteme emitieren über ein Linsensystem, z. B. mit Kunststoffen wie PMMA, PMMI, PC, PA oder Glas unter einem geeigneten Winkel Licht geeigneter Wellenlänge (z. B. 880 nm im nahen IR-Bereich) und detektieren das von der Scheibenaußenfläche reflektierte Licht über eine weitere optische Einrichtung. Für die Funktion dieses Sensorprinzips ist es erforderlich, dass im Strahlengang zwischen Oberfläche des optischen Sensors und der Scheibeninnenfläche ein transparentes Koppelkissen mit einem ähnlichen Brechungsindex wie Glas angebracht ist, das verhindert, dass das ausgesandte Licht bereits an der Scheibeninnenseite reflektiert wird.

Dieses Koppelkissen muss absolut luftblasenfrei an den Linsen und insbesondere an der Scheibe anliegen. Die bekannten Systeme verwenden hierzu für Infrarotlicht transparente elastomere Werkstoffe, wie z. B. Silikon, SEBS, Polyacrylat-Klebstoffe. Diese Werkstoffe sind nur in geringen Grenzen an verschiedene Scheibenradien adaptierbar und in der Lage Toleranzen in den Scheibenradien auszugleichen. Im Stand der Technik sind verschiedene Möglichkeiten zum Befestigen eines Sensors auf einer Oberfläche bekannt.

Bei der Anpresskopplung wird als Koppelmedium Silikon oder SEBS verwendet, dass durch eine permanente Krafteinwirkung an die Scheibe gepresst wird. Die Krafteinleitung erfolgt über das Sensorgehäuse und zusätzliche Befestigungselemente wie z. B. Metallfedern oder Schieber, die sich an einem Befestigungsrahmen abstützten. Der Befestigungsrahmen ist an die Windschutzscheibe geklebt. Das Silikon bzw. SEBS wird auf das Linsensystem bzw. auf den die Linse beinhaltenden Lichtleiter aufgespritzt.

Bei Silikon- oder SEBS-Koppelkissen erfolgt die Anpassung an den Scheibenradius durch ein scheibenseitig gewölbt ausgeführtes Koppelkissen. Die Verwendung von Silikonen oder SEBS-Materialien geringer Shore-Härte gewährleistet in engen Grenzen die Adaptierbarkeit an verschiedenen Scheiben-Radien und Radien-Toleranzen.

Bei der Klebekopplung kann das Koppelkissen eine transparente Haft-Klebefolie aus Polyacrylat aufweisen, dass einerseits auf den Lichtleiter aufgeklebt wird und anschließend mit dem Sensor an die Scheibe geklebt wird. Die Scheibenklebung der in der Regel zur Vorwärmung eine Bestrahlung mit NIR-Strahlung (nahes Infrarot) der Klebefolie vorausgeht, wird meist im Vakuum durchgeführt, um Lufteinschlüsse in der Klebekontaktfläche zu vermeiden.

Neben Polyacrylat-Klebefolien besteht auch die Möglichkeit einer sogenannten In-situ-Polymerisation des Polyacrylat-Haftklebstoffes. Hierbei wird der Polyacrylat-Haftklebstoff mittels einer Werkzeug-Form in flüssiger Form auf der Lichtleiter aufgebracht und mittels UV-Licht ausgehärtet. Diese Methode beinhaltet die grundsätzliche Möglichkeit, dass Koppelkissen scheibenseitig gewölbt, d. h. im Scheibenradius angepasst, auszuführen.

Polyacrylat-Haftklebstoffe weisen aufgrund ihres viskoelastischen Werkstoffverhaltes die Fähigkeit auf, sich in bestimmten Grenzen an verschiedene Scheibenradien anzupassen. Bei In-situ-polymerisierten Koppelkissen ergibt sich zusätzlich die Möglichkeit, das Koppelkissen zur besseren Anpassung an den Scheibenradius gewölbt auszuführen.

Ein Verfahren zum Befestigen eines optischen Sensors nach dem Oberbegriff des Anspruchs 1 ist aus dem Dokument DE-A-19902922 bekannt.

Ein Verfahren zum Befestigen eines optischen Sensors nach dem Oberbegriff des Anspruchs 2 ist aus dem DE-A-4307479 bekannt.

Es ist Aufgabe der vorliegenden Erfindung, einen Sensoraufbau bzw. ein Verfahren zum Befestigen eines Sensors auf einer Oberfläche vorzusehen, wobei der Sensor auch an Scheiben mit deutlichen unterschiedlichen Radien befestigt werden kann und womit es möglich ist, in verbesserter Weise lokale und globale Toleranzen in den Scheiben-Radien auszugleichen. Es ist weiterhin Aufgabe der Erfindung, dass die Klebstoffschicht möglichst dünn ist, um Klebemittel einzusparen.

Diese Aufgabe wird durch das Verfahren zum Befestigen eines optischen Sensors auf einer Oberfläche nach Ansprüchen 1 und 2 gelöst.

Weitere vorteilhafte Ausgestaltungen der Erfindung sind in den abhängigen Ansprüchen angegeben.

Gemäß der Erfindung ist ein Verfahren zum Befestigen eines optischen Sensors auf einer Oberfläche, insbesondere zum Befestigen eines Regensensors auf einer Scheibenoberfläche vorgesehen. Die Oberfläche kann eine Krümmung und/oder eine Toleranz aufweisen, wobei zwischen einer Aufsetzfläche des Sensors und der Oberfläche ein Koppelmedium eingebracht wird. Das Koppelmedium wird so verformbar gewählt, dass es geeignet ist, die Krümmung der Oberfläche und die Toleranz vollständig auszugleichen. Insbesondere wird das Koppelmedium viskoelastisch bzw. flüssig gewählt.

Auf diese Weise kann erreicht werden, dass der optische Sensor nicht so gestaltet sein muss, dass die aufzusetzende Oberfläche die gleiche Krümmung aufweist, wie die Scheibenoberfläche. Es ist somit z. B. möglich, optische Sensoren mit planen Flächen auf eine gewölbte Scheibe aufzubringen, weil das Koppelmedium den sich über die Fläche ändernden Abstand zwischen Scheibenoberfläche und Aufsetzfläche des Sensors ausgleicht. Zudem besteht bei einem verformbaren Koppelmedium der Vorteil, dass das Koppelmedium auch lokale Toleranzen und Unebenheiten der Scheibenoberfläche bzw. des Sensors ausgleichen kann. Das Koppelmedium ist also geeignet, eine optische Verbindung zwischen dem optischen Sensor und der dem Sensor abgewandten Oberfläche der Scheibe herzustellen. Auf diese Weise kann die Reflektion an der Außenseite der Scheibe gemessen werden, ohne dass Brechzahlschwankungen zwischen dem Koppelmedium und dem Lichtleiter des optischen Sensors sowie zwischen dem Koppelmedium und der Scheibe auftreten.

Erfindungsgemäß kann vorgesehen sein, dass als Koppelmedium eine Haft-Klebefolie, die ein viskoelastisches Material aufweist, zwischen Sensor und Oberfläche eingebracht wird. Die Dicke der Haft-Klebefolie wird dabei so gewählt, um durch Verformen die maximal mögliche Krümmung und die maximal mögliche Toleranz auszugleichen. Dies hat den Vorteil, dass nicht mit zunächst flüssigen Koppelmedien gearbeitet werden muss, so dass insbesondere bei senkrechten Oberflächen eine Verklebung vorgenommen werden kann. Bei flüssigen Koppelmedien besteht die Gefahr des Verlaufens.

Erfindungsgemäß kann auch vorgesehen sein, dass das Koppelmedium einen aushärtbaren Klebstoff aufweist, der auf die Oberfläche aufgetragen wird, wobei der Klebstoff so ausgehärtet wird, dass eine plane Oberfläche entsteht, auf die anschließend die plane Aufsetzfläche des Sensors aufgesetzt wird. Auf diese Weise wird mit einem aushärtbaren Klebstoff zunächst die Krümmung bzw. die Toleranzen der Oberfläche ausgeglichen, um eine Oberfläche zu schaffen, auf die die plane Aufsetzfläche des Sensors aufgesetzt werden kann. Vorzugsweise wird beim Auftragen des aushärtbaren Klebstoffes die Oberfläche horizontal ausgerichtet, so dass nach Aufbringen des aushärtbaren Klebstoffes sich der Klebstoff so ausbreitet, dass eine plane Oberfläche gebildet wird.

Vorzugsweise kann vorgesehen sein, dass die Krümmung der Aufsetzfläche des Sensors so angepasst wird, dass die der Krümmung der durch das Aushärten des Klebstoffes erzeugten Krümmung des Koppelmediums entspricht. Auf diese Weise kann eine geeignete Verbindung zwischen Sensor und Oberfläche auch dann geschaffen werden, wenn beim Aushärten des Klebstoffes keine plane Oberfläche sonder eine gekrümmte Oberfläche entsteht.

Es kann vorgesehen sein, dass das Befestigen des Sensors auf dem aushärtbaren Klebstoff durchgeführt wird, in dem der Sensor mit seiner Aufsetzfläche auf den zumindest teilweise ausgehärteten Klebstoff aufgesetzt wird.

Es ist bekannt die Aufsetzfläche des Sensors mit einem umlaufenden Rand auszubilden, so dass bei Aufsetzen der Aufsetzfläche auf die Oberfläche ein Hohlraum entsteht, wobei als Koppelmedium in den Hohlraum ein flüssiger Klebstoff eingebracht wird. Auf diese Weise wird gewährleistet, dass auch auf senkrechten Oberflächen der Sensor mit einem flüssigen und später aushärtbaren Koppelmedium befestigt werden kann, ohne dass das zunächst flüssige Koppelmedium auf der senkrechten Oberfläche verläuft.

Es ist bekannt, dass das Koppelmedium einen thermoplastischen Schmelzklebstoff aufweist, der auf die Oberfläche aufgebracht wird. Die Aufsetzfläche des Sensors wird auf den Schmelzklebstoff gedrückt, wobei während des Drückens des Sensors auf den Schmelzklebstoff der Schmelzklebstoff erwärmt wird, bis die Aufsetzfläche im Klebebereich vollständig benetzt ist. Diese Verfahren hat den Vorteil, dass zunächst der Schmelzklebstoff auf die Oberfläche aufgebracht werden kann und anschließend der Sensor auf den Schmelzklebstoff aufgebracht wird. Dieses Befestigungsverfahren ermöglicht das Befestigen eines Sensors auf einfache Weise auch an senkrechten Oberflächen. Durch den Schmelzklebstoff wird weiterhin eine Befestigung des Sensors gewährleistet, wenn die Krümmung der Aufsetzfläche des Sensors nicht der Krümmung der Oberfläche entspricht und die Oberfläche bzw. die Aufsetzfläche Toleranzen aufweist.

Des Weiteren ist auch bekannt, dass als Koppelmedium ein thermoplastischer Schmelzklebstoff auf die Aufsetzfläche des Sensors aufgebracht wird. Die Aufsetzfläche des Sensors wird anschließend auf die Oberfläche gedrückt, wobei während des Drückens der Aufsetzfläche des Sensors auf den Schmelzklebstoff, der Schmelzklebstoff erwärmt wird, bis die Oberfläche im Klebebereich vollständig benetzt ist. Dieses Verfahren hat gegenüber dem zuvor beschriebenen Verfahren den Vorteil, dass der Schmelzklebstoff nicht auf die Windschutzscheibe aufgebracht werden muss, was in einem Fertigungsprozess aufgrund der Größe der Windschutzscheiben Probleme mit sich bringt. Durch das Aufbringen des Schmelzklebstoffes zunächst auf die Aufsetzfläche des Sensors wird somit das Montageverfahren erheblich vereinfacht.

Das Erwärmen des Schmelzklebstoffes kann global durch Erwärmen des gesamten Systems Sensor, Oberfläche und Koppelmedium als auch lokal durchgeführt werden. Bei dem lokalen Erwärmen wird die Wärme durch den Sensor oder die Oberfläche auf das Koppelmedium zugeführt, so das im Wesentlichen nur im Auftreffbereich der Aufsetzfläche des Sensors auf das Koppelmedium und/oder im Auftreffbereich des Koppelmediums auf die Oberfläche der Schmelzklebstoff aufgeschmolzen wird und somit eine Verbindung zwischen dem Koppelmedium und dem Sensor bzw. der Oberfläche schafft.

Es ist aus dem Stand der Technik bekannt, dass wenn die Aufsetzfläche des Sensors elektrisch leitend ausgeführt wird oder ein elektrisch leitendes Material nahe der Aufsetzfläche angeordnet wird, dass die Erwärmung der Aufsetzfläche mit Hilfe von elektrischer Induktion vorgenommen werden kann. Dies stellt ein vorteilhaftes Verfahren dar, da durch die elektrische Induktion der Bereich, der sich erwärmt, sehr genau festgelegt werden kann.

Gemäß dem Stand der Technik ist ein Sensor zum Befestigen an einer Oberfläche mit einer Aufsetzfläche vorgesehen. Die Aufsetzfläche weist einen umlaufenden Rand auf, wobei die Aufsetzfläche, der Rand und die Oberfläche im Wesentlichen einen abgeschlossenen Raum bilden. In diesen abgeschlossenen Raum kann das Koppelmedium in flüssiger Form eingebracht werden und anschließend ausgehärtet werden. Dadurch, dass der Rand vorzugsweise nur eine sehr geringe Breite aufweist, ist ein solcher Sensor einfach auch auf unebene bzw. gekrümmte Oberflächen aufsetzbar.

Gemäß dem Stand der Technik ist ein Sensor zum Befestigen auf einer Oberfläche vorgesehen. Die Aufsetzfläche ist elektrisch leitend ausgeführt und/oder ein elektrisch leitendes Material ist nahe der Aufsetzfläche angeordnet, um die Aufsetzfläche mit Hilfe von elektrischer Induktion zu erwärmen. Auf diese Weise lässt sich die Erwärmung sehr gezielt im Bereich der Aufsetzfläche anbringen, so dass nur im Bereich der Aufsetzfläche das Koppelmedium bei Verwendung eines Schmelzklebstoffes aufgeschmolzen wird.

Bevorzugte Ausführungsform der Erfindung werden im folgenden anhand der beigefügten Zeichnungen näher erläutert. Es zeigen:
Fig. 1 einen Regensensor, der mit einer Klebefolie auf einer Windschutzscheibe aufgebracht ist;
Fig. 2 eine Darstellung einer Klebekopplung In-situ-polymerisierten Koppelkissen auf einer Windschutzscheibe;
Fig. 3 eine Darstellung einer Klebekopplung eines Regensensors auf einer Windschutzscheibe mit einem Abstandhalter;
Fig. 4 die Ausgestaltung eines Sensors zum Einbringen von Klebstoff in den durch Abstandhalter Scheibenoberfläche und Sensor gebildeten Hohlraum; und
Fig. 5 eine Darstellung einer Klebekopplung eines Regensensors auf einer Windschutzscheibe mit einem Schmelzklebstoff gemäß einer weiteren Ausführungsform der Erfindung.

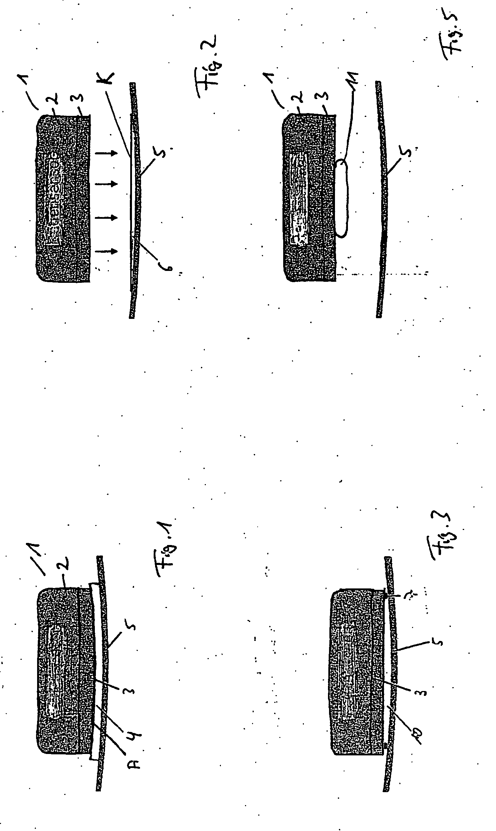

In Figur 1 ist ein auf eine Windschutzscheibe 5 aufgebrachter Regensensor 1 dargestellt. Der Regensensor 1 weist ein Gehäuse 2 auf, an dem ein Lichtleiter 3 angebracht ist. Der Lichtleiter 3 ist über eine Klebefolie 4 mit einer Innenseite der Windschutzscheibe 5 verklebt. Der Lichtleiter 3 ist mit seiner Aufsetzfläche A so mit der Klebefolie 4 verklebt, dass keine Lufteinschlüsse zwischen Klebefolie 4 und Aufsetzfläche des Lichtleiters 3 entstanden sind. Dies kann beispielsweise durch ein Verkleben in einer Vakuumumgebung erreicht werden. Auf gleiche Weise ist die Klebefolie 4 mit der Scheibeninnenfläche der Windschutzscheibe 5 verklebt. Die Aufsetzfläche A des Lichtleiters 3 ist vorzugsweise gekrümmt ebenso wie die Scheibeninnenfläche der Windschutzscheibe 5 .

Zum Befestigen des Regensensors 1 auf der Scheibenoberfläche wird die Klebefolie auf die gewölbte Lichtleiteroberfläche aufgeklebt. Eine Faltenbildung ist nicht zu erwarten, da nur eine geringe Wölbung erforderlich ist. Die Klebefolie umfasst vorzugsweise ein viskoelastisches Material, das sich an eine nicht-plane Oberfläche anpassen kann.

Die Krümmung der Aufsetzfläche des Lichtleiters 3 ist vorzugsweise genauso vorgesehen, dass sie der Krümmung der Scheibeninnenfläche entspricht. Dann kann die Klebefolie 4 so ausgebildet sein, dass sie nur lokale Toleranzen im Scheibenradium ausgleichen kann. Dadurch kann eine Klebefolie sehr geringer Dicke vorgesehen sein. Je größer die mögliche Abweichung zwischen den Krümmungen zwischen der Aufsetzfläche A des Regensensors 1 und der Scheibeninnenfläche sein kann, desto dicker die Klebefolie zu wählen, so dass bei einem befestigten Regensensor verschiedene Abstände zwischen der Aufsetzfläche A und der Scheibeninnenfläche durch die Klebefolie so ausgeglichen werden kann, dass keine Lufteinschlüsse gebildet werden.

In Figur 2 ist ein Verfahren zum Befestigen des Regensensors 1 auf der Innenseite einer Windschutzscheibe 5 dargestellt. Dazu wird zunächst ein Koppelmedium 6 in Form eines flüssigen aushärtbaren Klebstoffes auf die Innenseite der Windschutzscheibe 5 aufgebracht. Das Aufbringen, insbesondere ein dazu verwendetes Hilfswerkzeug und die Dosierung des Klebstoffes sind so abzustimmen, dass eine nach der UV-Aushärtung freiliegende Klebefläche K plan ist. Auf diese Klebefläche K wird dann der auf der Unterseite plane Lichtleiter aufgeklebt, d. h. kurzzeitig auf den an der Oberfläche noch nicht ganz ausgehärteten Klebstoff aufgepresst. Alternativ erfolgt das Aufkleben des Lichtleiters durch Aufkleben auf die ausgehärtete Klebefläche des Koppelmediums mit Hilfe eines weiteren Klebstoffes.

Vorzugsweise sind als aushärtbare Klebstoffe Polyacrylat-Klebstoffe zu verwenden. Durch das Aufbringen des Klebstoffes auf die Scheibe in flüssigen Phase vor Aufbringen des Regensensors ist eine Anpassung an verschiedene Scheiben-Radien und Scheiben-Toleranzen automatisch möglich. Insbesondere wenn das Aufbringen des Regensensors in einer horizontalen Lage erfolgt, kann sich durch die Wirkung der Schwerkraft eine plane Oberfläche im flüssigen Zustand auf der gekrümmten Windschutzscheibe ausbilden.

Durch lokal unterschiedliche Materialschwindungen bei der UV-Polymerisation in Folge verschiedener Auftragungsdicken aufgrund der Krümmung der Scheibe können Abweichungen von der Planrarität auftreten. So können beispielsweise Einfallstellen in der Mitte des Koppelmediums 6 auftreten. Solche Abweichungen von der Planarität sind jedoch reproduzierbar, so dass solche Abweichungen in der Aufsetzfläche des Lichtleiters 3 abgebildet werden können, so dass die Krümmung der Aufsetzfläche der Krümmung des Koppelmediums nach dem Aushärten entspricht. Es entsteht somit ein weitgehend spannungsfreier Aufbau, so dass bei Verwendung eines weiteren Klebstoffes zwischen Regensensor und Koppelmedium die Klebstoffdicke auf ein Minimum reduziert werden kann.

In Figur 3 ist eine Befestigung eines Regensensors 1 auf der Innenseite einer Windschutzscheibe 5 dargestellt. Der Regensensor 1 weist einen Lichtleiter 3 auf, an dessen Aufsetzfläche A ein umlaufender Rand 7 vorgesehen ist. Vorzugsweise wird der umlaufende Rand 7 bei der Herstellung des Lichtleiters mit angespritzt, so dass dieser fest mit dem Lichtleiter verbunden ist. Beim Aufsetzten des Regensensors 1 liegt nur der umlaufende Rand 7 auf der Innenseite der Windschutzscheibe 5 auf und bildet einen Hohlraum 10 zwischen der Aufsetzfläche A des Regensensors 1 und der Innenseite der Windschutzscheibe 5. Durch eine Einfüllöffnung, die entweder in dem umlaufenden Rand 7 oder in den Regensensor 1 vorgesehen sein kann, wird der entstehende Hohlraum 10 mit flüssigem Klebstoff gefüllt.

Der umlaufende Rand 7 kann aus formstabilen Kunststoffen, wie z. B. dem Lichtleiter-Kunststoff oder aus Elastomeren, z. B. SEBS, NBR, ausgebildet sein. Der Vorteil dieser Art der Erzeugung des Koppelmediums besteht darin, dass während der Aushärtung des Klebstoffes gleichzeitig die Klebung zur Windschutzscheibe 5 und die optische Kopplung zwischen Lichtleiter und der Aufsetzfläche A erfolgt. Wird ein Koppelmedium verwendet, das thermisch ausgehärtet werden muss, so sind bei Temperaturen > 150°C anstelle von PMMA, PMMI, PC, PA auch amorphe Lichtleiter-Kunststoffe mit höheren Einsatztemperaturen wie z. B. PES, PEI, PSU einsetzbar.

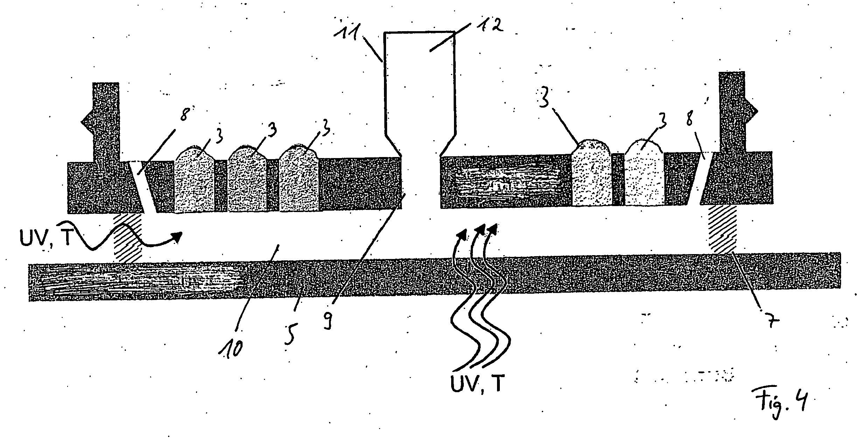

In Figur 4 ist dargestellt, wie ein flüssiges Koppelmedium z. B. Polyacrylat durch eine Einfüllöffnung 9 in dem Lichtleiter 3 in den Hohlraum 10 eingebracht wird, wobei seitlich nahe dem umlaufenden Rand 7, Öffnungen 8 vorgesehen sind, die als Überlaufkanäle für das flüssige Koppelmedium und als Austrittskanäle für die in dem Hohlraum 10 befindliche Luft dienen können. Auf diese Weise wird erreicht, dass sich in dem Hohlraum 10 nach Abschluss des Einbringvorgangs des Koppelmediums in den Hohlraum keine Luft befindet, so dass eine homogene optische Verbindung zwischen dem Lichtleiter 3 und der Windschutzscheibe 5 entsteht. Durch die Verwendung des flüssigen Koppelmediums können unterschiedliche Krümmungen von Lichtleiter 3 und Windschutzscheibe 5 sowie lokale Toleranzen ausgeglichen werden.

Das Einfüllen des flüssigen Koppelmediums durch die Einfüllöffnung 9 erfolgt vorzugsweise durch eine geeignete Dosiereinrichtung 11, in der in einer Vorratskammer 12 der flüssige Klebstoff aufbewahrt ist.

Das flüssige Koppelmedium, das in den Hohlraum 10 eingebracht worden ist, wird mit Hilfe von UV-Licht oder Infrarotlicht, das durch die Windschutzscheibe 5 oder den umlaufenden Rand 7 auf das flüssige Koppelmedium einwirkt, ausgehärtet.

Es kann gemäß einer weiteren Ausführungsform weiterhin vorgesehen sein, dass als Koppelmedium ein transparenter Schmelzklebstoff 11, wie z. B. PU, PA und andere verwendet werden können, der zunächst auf den Lichtleiter 3 aufgespritzt wird, wie in Fig. 5 gezeigt. Durch die einfache thermoplastische Verarbeitbarkeit von Schmelzklebstoffen kann eine beliebige Form des Koppelkissens realisiert werden. Beim Aufbringen des Regensensors 1 auf die Windschutzscheibe 5 wird die Aufsetzfläche A, auf die Schmelzklebstoff aufgebracht worden ist, oder leichtem Druck gegen die Scheibe gedrückt und der Schmelzklebstoff mittels Temperatureinwirkung zumindest oberflächennah geschmolzen. Durch das Anschmelzen des Schmelzklebstoffes wird die Scheibe 5 im Klebebereich wie die Aufsetzfläche A des Lichtleiters vollständig durch den Schmelzklebstoff benetzt.

Gleichzeitig erfolgt mit dem Anschmelzen des Schmelzklebstoffes das Anpassen an beliebige Scheibenkrümmungen und -toleranzen. Das Einbringen der Temperatur kann konvektiv d. h. lokal nur im Sensorbereich auf der Scheibe mittels eines Heißluftgebläses oder global in einem Ofen erfolgen. Zur Einhaltung eines definierten Abstandes des Lichtleiters zur Scheibe d. h. in einer definierten Klebstoffschichtdicke können Abstandshalter vorgesehen werden. Bei Kunststofflichtleitern können diese Abstandshalter schon beim Herstellungsprozess mit vorgesehen werden. Muss die thermische Aushärtung bei höheren Temperaturen von > 150°C erfolgen, sind statt PMMA, PMMI, PC und PA auch amorphe Lichtleiterkunststoffe mit höheren Einsatztemperaturen wie PES, PEI, PSU und andere einsetzbar.

Es ist möglich, die Erwärmung zum Anschmelzen des Schmelzklebstoffes auch über elektrische Induktion zu erreichen. Dazu ist der Lichtleiter so aufgebaut, dass entweder in dem Lichtleiter oder nahe dem Lichtleiter ein leitendes Material, z. B. ein Aluminiumblech angebracht ist oder der Lichtleiter selbst ein elektrisch leitendes Material aufweist. Mit Hilfe einer Induktionsspule, die in die Nähe der Sensoranordnung angebracht wird, kann der Lichtleiter auf Temperaturen erwärmt werden, die zum Schmelzen der gesamten oder zumindest der Oberflächennahen Schmelzklebstoffschicht führen. Insbesondere ist bei Verwendung eines leitenden Materials darauf zu achten, dass der Prozess und der konstruktive Aufbau so gestaltet ist, dass das Aufschmelzen des Klebstoffes auch im Bereich der nicht-metallischen Lichteintritts- und Lichtaustrittsöffnungen des Lichtleiters erfolgt.

### Bezugszeichenliste

- 1: Regensensor
- 2: Gehäuse
- 3: Lichtleiter
- 4: Koppelmedium
- 5: Windschutzscheibe
- 6: Koppelkissen
- 7: umlaufender Rand
- 8: Öffnung im Lichtleiter
- 9: Einfüllöffnung
- 10: Hohlraum
- 11: Schmelzklebstoff

## Patentansprüche

1. Verfahren zum Befestigen eines optischen Sensors (1) auf einer Oberfläche, insbesondere zum Befestigen eines Regensensors auf einer Scheibenoberfläche, wobei die Oberfläche eine Krümmung und/ oder eine Toleranz aufweisen kann, wobei zwischen einer Aufsetzfläche (A) des Sensors (1) und der Oberfläche ein Koppelmedium (4) eingebracht wird, wobei das Koppelmedium (4) so verformbar gewählt wird, dass es geeignet ist, die Krümmung der Oberfläche und die Toleranz auszugleichen, **dadurch gekennzeichnet, dass** als Koppelmedium (4) eine Haft-Klebefolie, die ein viskoelastisches Material aufweist, eingebracht wird, wobei die Dicke der Haft-Klebefolie so gewählt wird, um durch Verformung die maximal mögliche Krümmung und die maximal mögliche Toleranz auszugleichen.

2. Verfahren zum Befestigen eines optischen Sensors (1) auf einer Oberfläche, insbesondere zum Befestigen eines Regensensors auf einer Scheibenoberfläche, wobei die Oberfläche eine Krümmung und/ oder eine Toleranz aufweisen kann, wobei zwischen einer Aufsetzfläche (A) des Sensors (1) und der Oberfläche ein Koppelmedium (4) eingebracht wird, wobei das Koppelmedium (4) so verformbar gewählt wird, dass es geeignet ist, die Krümmung der Oberfläche und die Toleranz auszugleichen, wobei das Koppelmedium (4) einen aushärtbaren Klebstoff aufweiset, **dadurch gekennzeichnet, dass** der Klebstoff(K) auf die Oberfläche aufgetragen wird und so ausgehärtet wird, dass eine plane Oberfläche entsteht, auf die anschließend die plane Aufsetzfläche des Sensors aufgesetzt wird.

3. Verfahren nach Anspruch 2, **dadurch gekennzeichnet, dass** die Oberfläche so ausgerichtet wird, dass nach dem Aufbringen des aushärtbaren Klebstoffes auf die Oberfläche der Klebstoff sich so ausbreitet, dass die plane Oberfläche (K) gebildet wird.

4. Verfahren nach Anspruch 2 oder 3, **dadurch gekennzeichnet, dass** die Aufsetzfläche (Λ) des Sensors (1) mit einer Krümmung gewählt wird, dass die Krümmung der Aufsetzfläche (A) der durch das Aushärten des Klebstoffes erzeugte Krümmung einer Oberfläche des Koppelmediums (4) entspricht.

5. Verfahren nach Anspruch 4, **dadurch gekennzeichnet, dass** das Befestigen des Sensors (1) durch Aufpressen der Aufsetzfläche des Sensors (1) auf den zumindest teilweise ausgehärteten Klebstoff durchgeführt wird.

6. Sensoranordnung, die mit einem der Verfahren nach einem der Ansprüche 1 bis 5 hergestellt wird.

## Claims

1. Method for fastening an optical sensor (1) on a surface, in particular for fastening a rain sensor on the surface of a pane, the surface possibly having a curvature and/or a tolerance, a coupling medium (4) being introduced between a mounting surface (A) of the sensor (1) and the surface, the coupling medium (4) being selected to be deformable such that it is suitable to compensate the curvature of the surface and to compensate the tolerance, **characterized in that** an adhesive film that has a viscoelastic material is inserted as coupling medium (4), the thickness of the adhesive film being selected to compensate the maximum possible curvature and the maximum possible tolerance by deformation.

2. Method for fastening an optical sensor (1) on a surface, in particular for fastening a rain sensor on the surface of a pane, the surface possibly having a curvature and/or a tolerance, a coupling medium (4) being introduced between a mounting surface (A) of the sensor (1) and the surface, the coupling medium (4) being selected to be deformable such that it is suitable to compensate the curvature of the surface and to compensate the tolerance, the coupling medium (4) having a curable adhesive, **characterized in that** the adhesive (K) is applied to the surface and cured so that a planar surface is obtained, onto which the planar mounting surface of the sensor can subsequently be mounted.

3. Method according to Claim 2, **characterized in that** the surface is aligned so that after the application of the curable adhesive to the surface the adhesive spreads out so that the planar surface (K) is formed.

4. Method according to Claim 2 or 3, **characterized in that** the mounting surface (A) of the sensor (1) is selected with a curvature such that the curvature of the mounting surface (A) corresponds to the curvature, produced by the curing of the adhesive, of a surface of the coupling medium (4).

5. Method according to Claim 4, **characterized in that** the fastening of the sensor (1) is carried out by pressing the mounting surface of a sensor (1) onto the at least partially cured adhesive.

6. Sensor arrangement which is produced using one of the methods according to one of Claims 1 to 5.

## Revendications

1. Procédé pour la fixation d'un capteur optique (1) sur une surface, en particulier pour la fixation d'un capteur de pluie sur la surface d'une vitre, la surface pouvant présenter une courbure et/ou une tolérance, un moyen d'accouplement (4) étant monté entre une face de positionnement (A) du capteur (1) et la surface, le moyen d'accouplement (4) étant choisi de manière déformable de telle sorte qu'il soit approprié pour compenser la courbure de la surface et la tolérance, **caractérisé en ce que** l'on utilise comme moyen d'accouplement (4) un film de colle adhésive qui présente un matériau viscoélastique, l'épaisseur du film de colle adhésive étant choisie de manière à compenser par déformation la courbure maximale possible et la tolérance maximale possible.

2. Procédé pour la fixation d'un capteur optique (1) sur une surface, en particulier pour la fixation d'un capteur de pluie sur la surface d'une vitre, la surface pouvant présenter une courbure et/ou une tolérance, un moyen d'accouplement (4) étant monté entre une face de positionnement (A) du capteur (1) et la surface, le moyen d'accouplement (4) étant choisi de manière déformable de telle sorte qu'il soit approprié pour compenser la courbure de la surface et la tolérance, le moyen d'accouplement (4) présentant un adhésif durcissable, **caractérisé en ce que** l'adhésif (K) est appliqué sur la surface et est durci de telle sorte que l'on obtienne une surface plane, sur laquelle est ensuite posée la face de positionnement plane du capteur.

3. Procédé selon la revendication 2, **caractérisé en ce que** la surface est prévue de telle sorte qu'après l'application de l'adhésif durcissable sur la surface, l'adhésif se propage de telle sorte que la surface (K) soit formée.

4. Procédé selon la revendication 2 ou 3, **caractérisé en ce que** la face de positionnement (A) du capteur (1) est choisie avec une courbure, et **en ce que** la courbure de la face de positionnement (A) correspond à la courbure d'une surface du moyen d'accouplement (4) produite par le durcissement de l'adhésif.

5. Procédé selon la revendication 4, **caractérisé en ce que** la fixation du capteur (1) est effectuée en pressant la face de positionnement du capteur (1) sur l'adhésif au moins partiellement durci.

6. Agencement de capteur, fabriqué avec l'un des procédés selon l'une quelconque des revendications 1 à 5.
